Europäisches Patentamt

European Patent Office

Office européen des brevets

(11) Publication number: **0 072 744**
**B1**

# EUROPEAN PATENT SPECIFICATION

(45) Date of publication of patent specification: **12.03.86**

(51) Int. Cl.⁴: **G 01 N 27/00**

(21) Application number: **82401504.4**

(22) Date of filing: **09.08.82**

(54) Chemical sensor.

(30) Priority: **17.08.81 US 293768**

(43) Date of publication of application:
**23.02.83 Bulletin 83/08**

(45) Publication of the grant of the patent:
**12.03.86 Bulletin 86/11**

(84) Designated Contracting States:
**DE FR GB IT**

(56) References cited:
**FR-A-2 292 969**
**GB-A-1 049 742**
**US-A-3 260 104**
**US-A-3 431 770**
**US-A-3 561 253**
**US-A-3 689 907**

**Anal. Chem., 49(1977) 13, pages 1890-1898.**

**Z. Phys., 178(1964) 5, pages 457-471.**

**The file contains technical information submitted after the application was filed and not included in this specification**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **O'Connor, James Michael**
**3025 Greenway Drive**
**Ellicott City Maryland 21043 (US)**
Inventor: **Patton, Jesse Carl**
**3918 St. John Lane**
**Ellicott City Maryland 21043 (US)**

(74) Representative: **Brullé, Jean et al**
**Service Brevets Bendix 44, rue François 1er**
**F-75008 Paris (FR)**

## Description

The present invention is related to the field of solid state chemical sensors, and in particular to such sensors which are used for detecting of at least one gas component in a gas sample and comprise at least one vibrating member coated with a reactive material which selectively interacts with said gas component thus causing a change in the coating's mass and consequently in the natural resonance frequency of the vibrating member.

Solid state chemical sensors in which changes in conductivity of a material are produced in response to the reaction and/or absorption of a specific gas are known in the art. Typical of these sensors are the adsorption field effect transistor (ADFET) as disclosed in U.S. Patent No. 3 831 432, the thin film semiconductor $NO_x$ sensor as disclosed in U.S. Patent No. 4 169 369, the titania oxygen sensor disclosed in U.S. Patent No. 4 007 435, and the palladium hydrogen sensor taught by U.S. Patent No. 3 242 717. Another type of solid state chemical sensor is the coated piezoelectric crystal sensor as disclosed in U.S. Patents Nos. 3 164 004, 3 260 104, 3 744 296 and 3 828 607. In these sensors a piezoelectric crystal is coated with a material which selectively interacts with a given gas component causing a change in the coating's mass and the natural resonance frequency of the coated crystal. An electronic crystal oscillator circuit vibrates the coated crystal at its resonance frequency producing an output signal having a frequency indicative of the quantity of the gas component that has interacted with the coating.

It is an essential object of the present invention to provide a chemical sensor of the coated vibrating member type which has an increased sensitivity over the sensors of the prior art.

This object is achieved, according to the teaching of the invention, and in a chemical sensor of the kind referred to above, thanks to the fact that the vibrating member consists of a cantilevered beam suspended for vibration from a support structure and carrying on at least one surface thereof a layer of reactive material, said beam being vibrated at its natural resonance frequency by an oscillator and being further associated with sensor means for detecting its vibration to generate a resonance frequency signal having a frequency component equal to the vibration frequency of said beam. Advantageously, this resonance frequency signal is amplified in the oscillator to generate an output signal which itself is delivered to means for producing a force on the beam to sustain its vibration at its resonance frequency.

One advantage of the disclosed chemical sensor is that the change in the natural resonance frequency of the cantilevered beam is inversely proportional to the mass of the gas component which interacted with the reactive chemically modified surface. Another advantage is that cantilevered beam structure and supporting electronic circuitry may be contained on a single semiconductor chip. Another advantage is that the complete structure and supporting electronic circuits can be fabricated using existing semiconductor and integrated circuit technology. Another advantage is that the sensor may include a plurality of cantilevered beams, each beam being sensitized with a reactive material responsive to a different gas component, or alternatively, the sensor possibly including a reference cantilever beam and an electronic circuit for generating a reference signal. Another advantage is that the supporting electronics fabricated on the single semiconductor chip may include mixer circuits for generating signals having a frequency indicative of the change in the natural resonance frequency of each beam having a sensitized surface due to the added mass resulting from a chemical reaction or absorption.

These and other advantages of the invention will become readily apparent from reading the following description of some preferred embodiments, given by way of examples only, and with reference to the accompanying drawings, in which:

— Figure 1 is a top view of a chemical sensor according to the invention;
— Figure 2 is a cross-sectional view along line 2—2 of the sensor shown in Figure 1;
— Figure 3 is a top view of an alternate embodiment of the chemical sensor according to the invention;
— Figure 4 is a cross-sectional view along line 4—4 of the embodiment shown in Figure 3;
— Figure 5 is a partial top view of the sensor showing an interdigital heater element disposed on the upper surface of the cantilevered beam;
— Figure 6 is a top view of a dual beam sensor according to the invention; and
— Figure 7 is a top view of a multiple beam sensor.

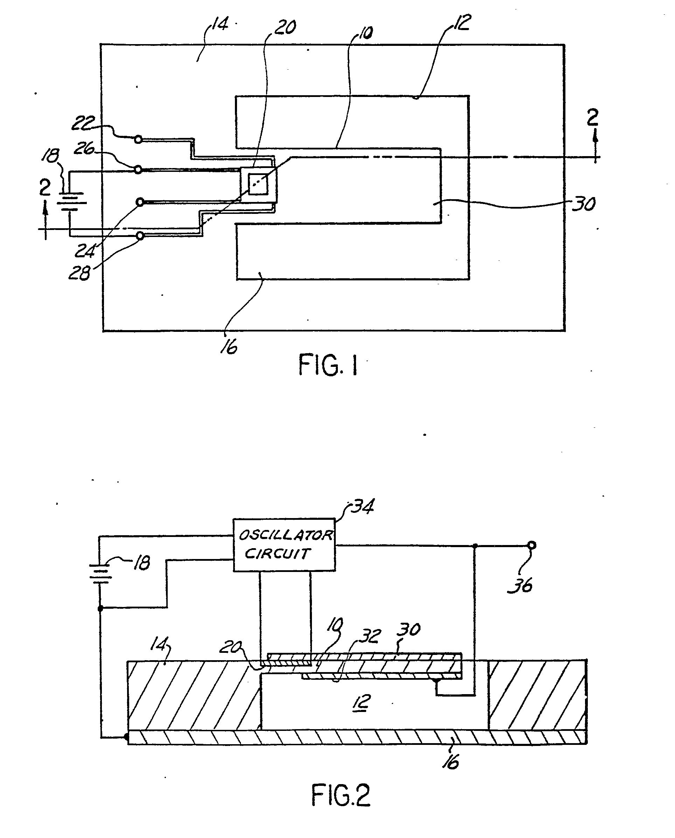

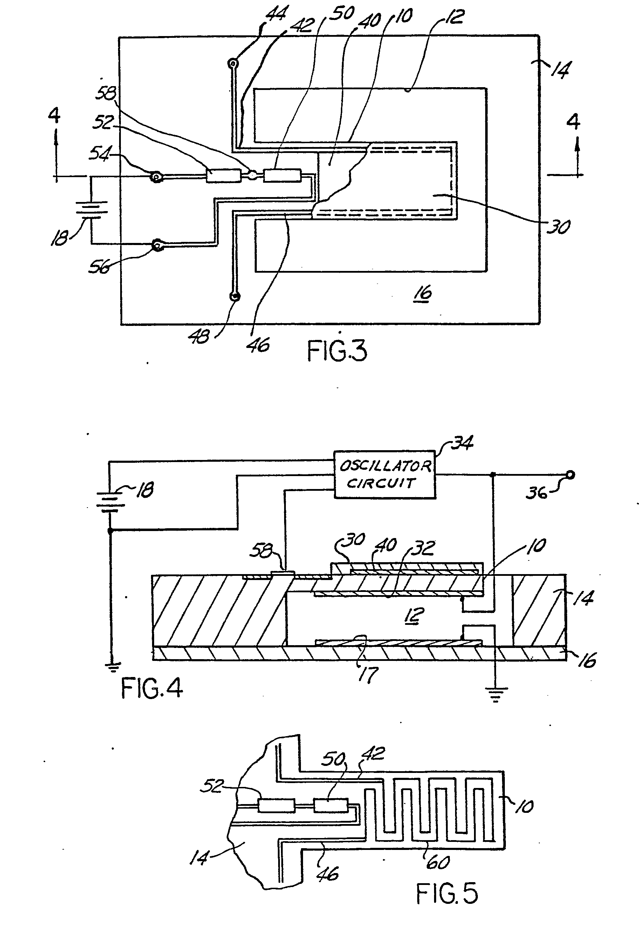

Referring to Figures 1 and 2, there is shown a top and cross-sectional view of the chemical sensor. A thin silicon or silicon dioxide cantilever beam 10 is suspended over an etched well 12 formed in a silicon substrate 14. The silicon substrate 14 is attached to a conductive base element 16. The base element 16 may be a metal plate as illustrated in Figure 2 or alternatively may be a silicon or quartz plate having a conductive metal electrode 17 disposed on its surface adjacent to the centilever beam 10 (see Fig. 4).

A stress sensor such as piezoresistive bridge 20 is disposed on the beam adjacent to its cantilevered or base end. The individual piezoresistive elements of the bridge 20 can be either diffused or ion-implanted on the silicon surface using techniques well known in the art. The four corners of the piezoresistive bridge are connected to terminals 22, 24, 26 and 28. The bridge 20 is energized by a source of electrical power, illustrated as battery 18 applying a potential difference between terminals 26 and 28, and generates an output signal between terminals 22 and 24 having a frequency component corresponding to the vibration frequency of beam 10.

The upper surface of beam 10 is sensitized with a layer of reactive material 30 which may chemically react with or absorb a specific component of the gas to be analyzed in a reversible or irreversible mode. Alternatively, the entire surface of the beam 10 may be sensitized with a layer of reactive material 30, increasing the detectivity of the sensor.

The output terminals 22 and 24 of the bridge 20 are connected to the inputs of an oscillator circuit 34 which also receives electrical power from battery 18. The output of the oscillator circuit 34 is connected to an output terminal 36 and to an electrode 32 disposed on the bottom side of cantilever beam 10 adjacent to the conductive base element 16. In the preferred embodiment, the oscillator circuit 34 is formed directly on the surface of substrate 14 using conventional integrated circuit technology.

In operation, the piezoresistive bridge 20 generates an oscillating signal having a frequency corresponding to the frequency of the vibrating cantilever beam 10. This output signal is received by the oscillator circuit 34 which generates an output signal applied to electrode 32. The output signal applied to electrode 32 generates an oscillating electric field between the cantilever beam 10 and the base plate 16, and produces an electrostatic force on beam 10. It is assumed that the oscillator circuit 34 has the requisite phase shift capabilities such that the generated electrostatic force sustains the vibration of the beam 10 at its natural resonance frequency. The cantilever beam 10 is equivalent to the tuned circuit of a Hartley or Colpitts oscillator or the piezoelectric crystal in a Pierce type oscillator.

The fundamental resonance frequency of the cantilever beam is given by:

$$f = 0{,}16 \ (E/\rho)^{1/2} \ (t/L^2) \qquad (1)$$

where:
E is Youngs Modulus for silicon
$\rho$ is the density of silicon
t is the beam's thickness, and
L is the beam's length
In a typical embodiment of the sensor in which $t = 35 \ \mu m$ and $L = 350 \ \mu m$, the resonance frequency "f" of beam 10 would be 320 kHz.

Upon exposure of the sensor to a gas sample to be analyzed containing the specific component to which the layer of reactive material 30 interacts, the specific gas will either chemically react with layer 30 or be absorbed by the layer. The term "interact" as used hereinafter will mean either a chemical reaction or an absorption of the specific component with the reactive material or both. This interacted gas increases the mass of the beam 10.

From the teachings of J. Hlavay, G. Guilbault, Analytical Chemistry, Vol. 49, No. 13, 1977 p. 1890, relating to quartz crystal plates vibrating in the shear mode, it can be deduced that the change in the resonance frequency of the beam, $\Delta f$, due to the added mass, $\Delta m$, of the interacted gas component is:

$$\Delta f/f = -\Delta m/tA\rho \qquad (2)$$

where A is the coated surface area and f, t and $\rho$ are as defined for equation (1). The mass sensitivity of the sensor where the beam thickness $t = 35 \ \mu m$, the beam length $L = 350 \ \mu m$ and the beam width $w = 100 \ \mu m$, is approximately 113 kHz per microgram of the interacted component. The quantity $\Delta m$ of the interacted component may, therefore, be determined directly from the change in the resonance frequency of the cantilevered beam 10.

Referring now to Figures 3 and 4, there is shown an alternate embodiment of the chemical sensor. Elements common to both embodiments of the sensor have the same reference numerals. In the embodiment of Figures 3 and 4, the strain sensor 20 comprises serially connected piezoresistive elements 50 and 52 forming a voltage divider. Piezoresistive element 50 is disposed on the top surface of cantilevered beam 10 while piezoresistive element 52 is disposed on the top surface of the silicon substrate 14. As with the piezoresistive bridge the elements 50 and 52 may be formed directly on the surfaces of silicon substrate and beam using diffusion or ion-implantation techniques. A potential difference from a source of electrical power, such as battery 18 connected between terminals 54 and 56, is applied across serially connected piezoresistive elements 50 and 52. The resistance of piezoresistive element 50 changes with the vibration of beam 10 producing an oscillating signal at junction 58 having a frequency corresponding to the vibration frequency of beam 10. The signal at junction 58 is input to an oscillator circuit 34 which generates an output signal applied to electrode 32 disposed on the bottom surface of beam 10. As previously described, the output signal applied to electrode 32 generates an oscillating electric field between the cantilevered beam 10 and the thin film electrode on base plate 16 producing an electrostatic force sustaining the vibration of beam 10 at its natural resonance frequency. The output of the oscillator circuit 34 is also communicated to an output terminal 36. As in the embodiment of Figures 1 and 2, the oscillator circuit 34 may be formed directly on the surface of the silicon substrate 14 or may be a separate entity.

The embodiment shown on Figures 3 and 4 further includes a heater element 40 disposed on the upper surface of beam 10. The layer of reactive material 30 is disposed over the heater element 40. The heater element allows the beam to be heated to drive off the absorbed gas molecules thereby regenerating the sensor.

Alternatively, the heater may be used to heat the layer of reactive material to a temperature optimizing the interaction between the reactive material and the selected component of the gas to be analyzed. This capability is very advantageous when the sensor is operated in a cold environment where the reaction and/or absorbtion process of the reactive material may be substantially retarded.

The heater element 40 may be a thin layer of resistive material, such as tin oxide, deposited between a pair of parallel electrodes 42 and 46 as shown on Figure 3. Electrical power is applied to the heater element via terminals 44 and 48 connected to electrodes 42 and 46, respectively.

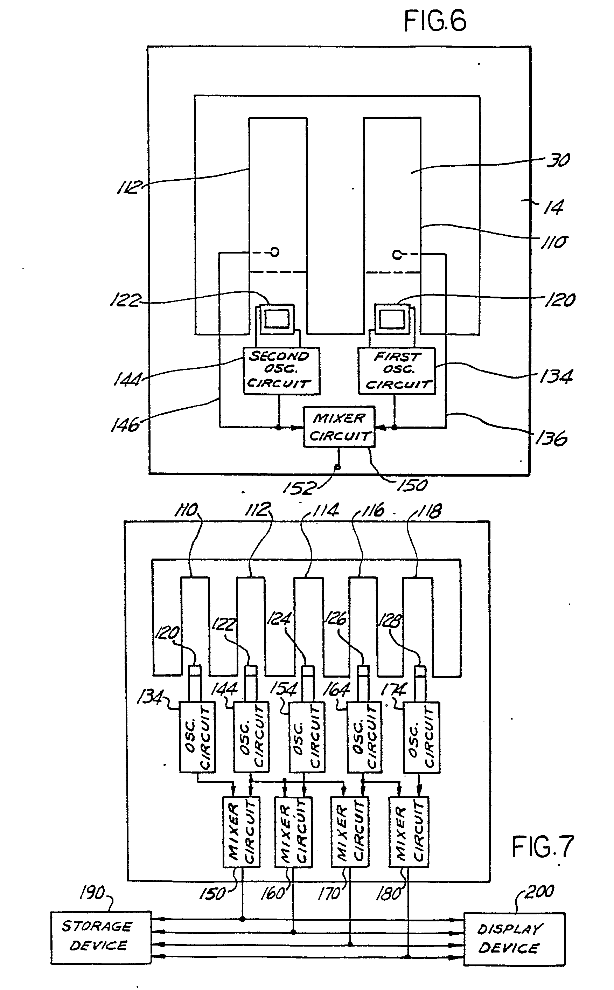

Alternatively, the heater element 40 may be an interdigital resistive element 60 disposed on the upper surface of beam 10 as shown in Figure 5. As in the embodiment illustrated in Figure 3, electrical power to heater element 60 is applied through conductor electrodes 42 and 46. The layer of reactive material 30 is omitted from Figure 5 to simplify the drawing.

Referring now to Figure 6, there is shown another embodiment of the chemical sensor having two cantilevered beams of the type described with reference to Figures 1 through 4. The physical dimensions of the two beams are selected so that they both have the same natural resonance frequency. In this embodiment, only beam 110 has a layer of reactive material 30 which interacts with a selected component of the gas to be analyzed. The other beam 112 does not have a layer of reactive material and functions as a reference signal generator. Both beams 110 and 112 have an associated strain sensor 120 and 122, respectively, disposed on their upper surfaces adjacent to the cantilevered supported ends. These strain sensors may be a piezoresistive bridge as described with reference to Figure 1, a piezoresistive voltage divider as illustrated on Figure 3, or a single piezoelectric element.

The output of strain sensor 120 associated with the first beam 110 is received by a first oscillator circuit 134 which generates an output which is connected to the electrode on the bottom of beam 110 by means of a lead 136.

Similarly, the output of strain sensor 122 is received by a second oscillator circuit 144 which generates an output which is connected to the electrode on the bottom of beam 112 by means of a lead 146.

The outputs of the first oscillator circuit 134 and second oscillator circuit 144 are also received by a mixer circuit 150 of conventional design. The mixer circuit 150 mixes the two received output signals and generates a difference signal on terminal 152 having a frequency component equal to the difference between the frequency of the signal received from the first oscillator circuit and the frequency of the signal received from the second oscillator circuit.

As the layer of reactive material 30 on the surface of beam 110 reacts with the selected component of the gas sample, when present, a change $\Delta m$ in the mass of the beam is provided. In accordance with equation (2) the resonance frequency of beam 110 will change inversely proportionate to the change in the mass $\Delta m$. The frequencies of the signals produced by the first and second oscillator circuits will now be different and the signal from mixer circuit 150 will have a frequency proportional to the quantity or mass of the interacted component of the gas sample.

The dual beam arrangement of the sensor of Figure 6 has the advantage that it is relatively insensitive to temperature, pressure or attitude with respect to gravity since these factors will affect both beams alike and the frequency difference of the signal generated by the mixer circuit 150 will remain proportional to the quantity of component which interacted with the reactive material disposed on the surface of beam 110.

The dual beam arrangement of Figure 6 also permits the isolation of a specific gas component when the reactive material disposed on beam 110 may also be sensitive to a second gas component such as water or carbon dioxide. To isolate the frequency response of beam 110 to only the frequency change caused by the interaction of the specific gas component the beam 112 may include a layer of reactive material responsive to water and/or carbon dioxide only, such that the change in resonance frequencies of beams 110 and 112 due to the presence of water and/or carbon dioxide in the sample will be the same. Therefore, the frequency difference output by mixer circuit 150 will be proportional only to the quantity of the specific gas component which interacts with, or is absorbed by the reactive layer on beam 110, independent of the quantity of water or carbon dioxide in the sample.

Referring now to Figure 7, there is shown a multibeam embodiment of the chemical sensor. The sensor has a plurality of cantilevered silicon beams 110 through 118 suspended over a well formed in a silicon substrate. The structure of each individual beam is equivalent to the structures shown on Figures 1 through 4, each beam having an associated strain sensor and an associated oscillator circuit. For illustrative purposes it is assumed that beam 112 has no layer of reactive material and in conjunction with its associated strain sensor 122 and oscillator circuit 144 functions as reference signal generator. Beam 110 is sensitized with a first reactive material responsive to a gas component A, and has a strain sensor 120 and an associated oscillator circuit 134. Beam 114 is sensitized with a second reactive material responsive to a gas component B, and has a strain sensor 124 and an associated oscillator circuit 154. Beam 116 is sensitized with a third reactive material responsive to a gas component C and has a strain sensor 126 and an associated oscillator circuit 164. Beam 118 is sensitized with a fourth reactive material responsive to gas components C and D.

The outputs of oscillator circuits 134 and 144 are received by a mixer circuit 150 which generates a signal having a frequency proportional to the quantity of gas component A. The outputs of oscillator circuits 144 and 154 are received by a mixer circuit 160 which generates a signal having a frequency proportional to the quantity of gas component B. Similarly, the outputs of oscillator circuits 144 and 164 are received by a mixer circuit 170 which generates a signal having a frequency proportional to the quantity of gas component C. In an equivalent manner, the outputs of oscillator circuits 164 and 174 are received by a mixer circuit 180 which generates a signal having a frequency proportional to gas component D.

The frequency signals generated by mixer circuits 150, 160, 170 and 180 may be input into a storage device 190 where they are stored or may be input to a display device 200 calibrated to produce a visual display indicative of the quantities of the selected gases A, B, C and D that have been reacted with or absorbed by the reactive materials on the associated beams. The storage device 190 may be a solid state memory storing digital words indicative of the frequencies of the received signals or a magnetic tape storing the frequencies directly. The display device 200 may be a cathode ray tube, or any solid state visual display panel such as a LED or liquid crystal display panel.

Various types of reactive materials which are capable of interacting with one or more components of a gas to be analyzed are known in the art. As reported by J. Hlavay and G. G. Guilbault, in their article "Applications of the Piezoelectric Crystal Detector in Analytical Chemistry" *Analytical Chemistry,* Vol. 49, No. 13, November 1977, pp. 1890—1898, $S_iO_x$ coatings may be used to detect water, triethanolamine quadrol to detect $SO_2$, $FeCl_3$ to detect diisopropylmethyl phosphonate (pesticides) and Ascorbic Acid with silver acid to detect ammonia. This article discloses many other coatings which may be used as a reactive surface applied to the surfaces of beam 10. Other types of reactive coatings have been disclosed in U.S. Patents Nos. 3 164 004, 3 260 104, 3 266 291 and 3 744 296.

These coatings may be applied or deposited on the surface of the beam 10 by any physical means such as spraying, painting, dipping, ion implantation or vapor deposition. However, it is preferred that when possible the coating be chemically bonded to the beam's surface. This produces a more rugged sensor. Chemical bonding can be accomplished by reacting the coating chemical with active molecular or atomic groups on the surface of the beam. As previously indicated the layer of reactive material 30 may be formed only on the top surface of beam 10 as shown in Figures 1 and 2. However, the sensitivity of the sensor may be increased by sensitizing the entire surface of the beam.

Although the invention has been disclosed using specific materials and configuration of the vibrating beam chemical sensor, it is not intended that the scope of invention be limited to the embodiments illustrated and described.

## Claims

1. A chemical sensor for detecting at least one gas component in a gas sample, and comprising at least one vibrating member coated with a reactive material which selectively interacts with said gas component thus causing a change in the coating's mass and consequently in the natural resonance frequency of said vibrating member, characterized in that the vibrating member consists of a cantilevered beam (10) suspended for vibration from a support structure (14) and carrying on at least one surface thereof a layer (30) of reactive material, said beam being vibrated at its natural resonance frequency by an oscillator (34) and being further associated with sensor means (20) for detecting its vibration to generate a resonance frequency signal having a frequency component equal to the vibration frequency of said beam.

2. A chemical sensor according to claim 1, characterized in that the resonance frequency signal is amplified in the oscillator (34) to generate an output signal which itself is delivered to means (16, 32) for producing a force on the beam (10) to sustain its vibration at its resonance frequency.

3. A chemical sensor according to claim 2, characterized in that the means for producing a force comprises a first electrode (32) disposed on one surface of the beam (10) and a second electrode (16) fixedly carried by the support structure (14) proximate said first electrode, said output signal being applied between said first and second electrodes to generate an oscillating electrostatic field therebetween which produces an oscillating electrostatic force on the beam (10) sustaining the vibration thereof.

4. A chemical sensor according to any of claims 1—3, characterized in that the beam (10) is a cantilevered beam having a base end fixedly attached to a supporting substrate (14) and an opposite free end.

5. A chemical sensor according to claim 4, characterized in that said supporting substrate (14) and cantilevered beam (10) are an integral structure.

6. A chemical sensor according to claim 5, characterized in that the material of said integral structure (10, 14) is a semiconductor material.

7. A chemical sensor according to any of claims 1 to 6, characterized in that it further includes heater means (40) disposed on the surface of the beam (10) for heating said layer (30) of reactive material.

8. A chemical sensor according to any of claims 4 to 7, characterized in that said supporting substrate (14) has a thickness greater than the thickness of the beam (10) and has an aperture (12) passing therethrough, and in that the cantilevered beam is suspended over one end of said aperture.

9. A chemical sensor according to claim 8, characterized in that said second electrode (16) is a metal plate covering the opposite end of said aperture (12).

10. A chemical sensor according to any of claims 5 to 9, characterized in that said sensor means (20) and oscillator (34) are formed directly on the surface of said integral structure (10, 14).

11. A chemical sensor according to claim 10, characterized in that said sensor means (20) is a piezoresistive bridge formed at the base end of the beam (10) adjacent to said integral structure (14).

12. A chemical sensor according to claim 10, characterized in that said sensor means (20) is a dual element voltage divider (50, 52) having at least one piezoresistive element (50) disposed at the base end of the beam (10) adjacent to said integral structure (14).

13. A chemical sensor according to any of claims 1 to 12, characterized in that it includes two beams (110, 112) having the same initial resonance frequency and each associated with a respective oscillator (134, 144) and a respective sensor means (120, 122), at least one (110) of said beams carrying a layer (30) of reactive material, and a mixer circuit (150) responsive to the resonance frequencies of said two beams (110, 112) to generate an output signal having a frequency component equal to the difference between their resonance frequencies.

14. A chemical sensor according to claim 13, characterized in that said two beams (110, 112) carry layers of different reactive materials.

15. A chemical sensor according to claim 14, characterized in that the layer of reactive material carried on one of said two beams (110, 112) interacts with a first and a second component of the gas sample to be analyzed, and the layer of reactive material carried on the other beam interacts with only said first component of the gas sample.

16. A chemical sensor according to any of claims 1 to 12, characterized in that it includes a plurality of beams (110, 112, 114, 116, 118) carrying layers of reactive materials which interact with different components of the gas sample to be analyzed, each beam being associated with a respective oscillator (134, 144, 154, 164, 174) and a respective sensor means (120, 122, 124, 126, 128).

17. A chemical sensor according to claim 16, characterized in that it further includes a reference beam (112) carrying no layer of reactive material, said reference beam being associated with a reference oscillator (144) and a reference sensor means (122).

18. A chemical sensor according to claim 17, characterized in that it further includes mixer circuits (150, 160, 170, 180) responsive to the resonance frequencies of each of said beams (110, 114, 116, 118) and said reference beam (112) to generate an output signal for each beam, each output signal having a frequency component equal to the difference between the resonance frequency of its associated beam and the resonance frequency of the reference beam.

19. A chemical sensor according to claim 18, characterized in that at least one (118) of said beams carries a layer of reactive material interacting with two different components of the gas sample to be analyzed and a second (116) of said beams carries a layer of reactive material responsive to only one of said two different components, and in that the sensor further includes a mixer circuit (180) for generating an output signal in response to the resonance frequencies of said one and second beams (118, 116) having a frequency component equal to the difference between their resonance frequencies.

20. A chemical sensor according to claim 18 or 19, characterized in that said associated oscillator and sensor means and said reference oscillator and sensor means each generate an output signal indicative of the resonance frequencies of their associated beams and the reference beam respectively, and in that said mixer circuits are responsive to the output signals generated by said oscillator and sensor means.

**Patentansprüche**

1. Chemischer Fühler zum Feststellen einer Gaskomponente in einem Gas, mit mindestens einem vibrierenden Bauteil, das mit einem reaktiven Material beschichtet ist, das mit der Gaskomponente selektiv reagiert und damit eine Änderung der Masse der Beschichtung und folglich der natürlichen Resonanzfrequenz des vibrierenden Bauteils hervorruft, dadurch gekennzeichnet, daß das vibrierende Bauteil aus einem freitragenden Balken (10) besteht, der zur Ausführung der Vibration an einer Unterlage (14) gehalten ist und an dessen einer Oberfläche eine Schicht (30) reaktiven Materials vorgesehen ist, wobei der Balken in seiner natürlichen Resonanzfrequenz durch einen Oszillator (34) in Schwingungen versetzt und mit einem Sensor (20) verbunden ist, der auf die Vibration anspricht und ein resonantes Frequenzsignal erzeugt, das eine Frequenzkomponente aufweist, die gleich der Vibrationsfrequenz des Balkens ist.

2. Chemischer Fühler nach Anspruch 1, dadurch gekennzeichnet, daß das resonante Frequenzsignal in dem Oszillator (34) verstärkt wird, um ein Ausgangssignal zu erzeugen, das einer Vorrichtung (16, 32) zugeführt wird, um an dem Balken (10) eine Kraft zu erzeugen, welche die Schwingung in der Resonanzfrequenz aufrechterhält.

3. Chemischer Fühler nach Anspruch 2, dadurch gekennzeichnet, daß die Vorrichtung zum Erzeugen der Kraft eine erste Elektrode (32) auf der einen Oberfläche des Balkens (10) und eine zweite Elektrode (16) aufweist, die mit der Unterlage (14) nahe der ersten Elektrode fest verbunden ist, wobei das Ausgangssignal zwischen der ersten und zweiten Elektrode angelegt wird, um zwischen den Elektroden ein oszillierendes elektrostatisches Feld zu erzeugen, welches eine oszillierende elektrostatische Kraft an dem Balken (10) erzeugt, um dessen Schwingung aufrechtzuerhalten.

4. Chemischer Fühler nach einem der Ansprüche 1—3, dadurch gekennzeichnet, daß der Balken (10) einseitig eingespannt ist, wobei das eine Ende des mit der Unterlage (14) verbunden ist und das entgegengesetzte Ende frei ist.

5. Chemischer Fühler nach Anspruch 4, dadurch gekennzeichnet, daß die Unterlage (14) und der Balken (10) einstückig sind.

6. Chemischer Fühler nach Anspruch 5, dadurch gekennzeichnet, daß das Material der einstückigen Vorrichtung (10, 14) ein Halbleiterwerkstoff ist.

7. Chemischer Fühler nach einem der Ansprüche 1—6, dadurch gekennzeichnet, daß auf der Oberfläche des Balkens (10) zum Erwärmen der Schicht (30) aus reaktivem Werkstoff Heizmittel (40) vorgesehen sind.

8. Chemischer Fühler nach einem der Ansprüche 4—7, dadurch gekennzeichnet, daß die Unterlage (14) eine Dicke aufweist, die größer ist als die Dicke des Balkens (10) und mit einer sie durchsetzenden Öffnung (12) versehen ist und daß der freitragende Balken an einem Ende der Öffnung eingespannt ist.

9. Chemischer Fühler nach Anspruch 8, dadurch gekennzeichnet, daß die zweite Elektrode (16) eine Metallplatte ist, die das entgegengesetzte Ende der Öffnung (12) bedeckt.

10. Chemischer Fühler nach einem der Ansprüche 5—9, dadurch gekennzeichnet, daß der Sensor (20) und der Oszillator (34) unmittelbar auf der Oberfläche des einstückigen Bauteils (10, 14) ausgebildet sind.

11. Chemischer Fühler nach Anspruch 10, dadurch gekennzeichnet, daß der Sensor (20) eine piezoresistive Brücke ist, die am Basisende des Balkens (10) neben dem einstückigen Bauteil (14) gebildet ist.

12. Chemischer Fühler nach Anspruch 10, dadurch gekennzeichnet, daß der Sensor (20) ein aus zwei Elementen bestehender Spannungsteiler (50, 52) ist, der mindestens ein piezoresistives Element (50) aufweist, das am Basisende des Balkens (10) neben dem einstückigen Bauteil (14) angeordnet ist.

13. Chemischer Fühler nach einem der Ansprüche 1—12, dadurch gekennzeichnet, daß zwei Balken (110, 112) mit gleicher anfänglicher Resonanzfrequenz vorgesehen sind, von denen jeder mit je einem Oszillator (134, 144) und einem Sensor (120, 122) zusammenwirkt, wobei mindestens einer (110) der Balken mit einer Schicht (30) reaktiven Materials versehen ist, und daß ein Mischkreis (150) vorgesehen ist, der auf die Resonanzfrequenzen der beiden Balken (110, 112) anspricht, um ein Ausgangssignal mit einer Frequenzkomponente zu erzeugen, die gleich der Differenz der beiden Resonanzfrequenzen ist.

14. Chemischer Fühler nach Anspruch 13, dadurch gekennzeichnet, daß beide Balken (110, 112) Schichten unterschiedlichen reaktiven Materials aufweisen.

15. Chemischer Fühler nach Anspruch 14, dadurch gekennzeichnet, daß die an einem der beiden Balken (110, 112) vorgesehene reaktive Schicht mit einer ersten und einer zweiten zu analysierenden Gaskomponente reagiert und daß die reaktive an dem anderen Balken vorgesehene Schicht nur mit der ersten Gaskomponente reagiert.

16. Chemischer Fühler nach einem der Ansprüche 1—12, dadurch gekennzeichnet, daß mehrere Balken (110, 112, 114, 116, 118) vorgesehen sind, welche Schichten reaktiven Materials aufweisen, die mit unterschiedlichen Gaskomponenten des zu analysierenden Gases reagieren, wobei jeder Balken mit je einem Oszillator (134, 144, 154, 164, 174) und einem Sensor (120, 122, 124, 126, 128) versehen ist.

17. Chemischer Fühler nach Anspruch 16, dadurch gekennzeichnet, daß ein Referenzbalken (112) vorgesehen ist, der keine reaktive Schicht aufweist und daß der Referenzbalken mit einem Referenzoszillator (144) und einem Referenzsensor (122) zusammenwirkt.

18. Chemischer Fühler nach Anspruch 17, dadurch gekennzeichnet, daß Mischkreise (150, 160, 170, 180) vorgesehen sind, welche auf die Resonanzfrequenzen jedes Balkens (110, 114, 116, 118) und des Referenzbalkens (112) ansprechen, um ein Ausgangssignal für jeden Balken zu erzeugen, wobei jedes Ausgangssignal eine Frequenzkomponente aufweist, die gleich der Differenz zwischen der Resonanzfrequenz des zugeordneten Balkens und der Resonanzfrequenz des Referenzbalkens ist.

19. Chemischer Fühler nach Anspruch 18, dadurch gekennzeichnet, daß mindestens ein Balken (118) mit einer Schicht reaktiven Materials versehen ist, das mit zwei unterschiedlichen Komponenten des zu analysierenden Gases reagiert und daß ein zweiter Balken (116) mit einer Schicht reaktiven Materials versehen ist, das nur mit einem der beiden unterschiedlichen Komponenten reagiert, und daß der Sensor einen Mischkreis (180) aufweist, um ein Ausgangssignal abhängig von den Resonanzfrequenzen des ersten und zweiten Balkens (118, 116) mit einer Frequenzkomponente zu erzeugen, die gleich der Differenz zwischen deren Resonanzfrequenzen ist.

20. Chemischer Fühler nach Anspruch 18 oder 19, dadurch gekennzeichnet, daß der entsprechende Oszillator und Sensor sowie der Referenzoszillator und der Sensor jeweils ein Ausgangssignal erzeugen, das für die Resonanzfrequenzen der zugeordneten Balken und des Referenzbalkens indikativ ist, und daß die Mischkreise auf die von dem Oszillator und dem Sensor erzeugten Ausgangssignal ansprechen.

**Revendications**

1. Détecteur chimique pour détecter au moins un composant gazeux dans un échantillon gazeux, et comprenant au moins un élément vibrant revêtu d'un matériau réactif qui interagit sélectivement avec le composant gazeux, provoquant ainsi un changement de la masse du revêtement et en conséquence de la fréquence de résonnance naturelle de l'élément vibrant, caractérisé en ce que l'élément vibrant consiste en une lame vibrante (10) suspendue pour vibrer à partir d'une structure support (14) et portant sur au moins une de ses surfaces une couche (30) de matériau réactif, cette lame étant amenée à vibrer à sa fréquence de résonnance naturelle par un oscillateur (34) et étant en outre associée à un moyen détecteur (20) pour détecter sa vibration pour produire un signal de fréquence de résonnance ayant une composante de fréquence égale à la fréquence de vibration de la lame.

2. Détecteur chimique selon la revendication 1, caractérisé en ce que le signal de fréquence de résonnance est amplifié dans l'oscillateur (34) pour produire un signal de sortie qui est lui-même fourni à un moyen (16, 32) pour produire une force sur la lame (10) pour entretenir sa vibration à sa fréquence de résonnance.

3. Détecteur chimique selon la revendication 2, caractérisé en ce que le moyen pour produire une force comprend une première électrode (32) disposée sur une surface de la lame (10) et une seconde électrode (16) portée de façon fixe par la structure support (14) proche de la première électrode, ledit signal de sortie étant appliqué entre les première et seconde électrodes pour produire un champ électrostatique oscillant entre elles qui produit une force électrostatique oscillante sur la lame (10) entretenant sa vibration.

4. Détecteur chimique selon l'une quelconque des revendications 1 à 3, caractérisé en ce que la lame (10) est une lame vibrante ayant une extrémité de base attachée de façon fixe à un substrat support (14) et une extrémité opposée libre.

5. Détecteur chimique selon la revendication 4, caractérisé en ce que le substrat support (14) et la lame vibrante (10) constituent une structure solidaire.

6. Détecteur chimique selon la revendication 5, caractérisé en ce que le matériau de ladite structure solidaire (10, 14) est un matériau semiconducteur.

7. Détecteur chimique selon l'une quelconque des revendications 1 à 6, caractérisé en ce qu'il comprend en outre un moyen de chauffage (40) disposé sur la surface de la lame (10) pour chauffer la couche (30) de matériau réactif.

8. Détecteur chimique selon l'une quelconque des revendications 4 à 7, caractérisé en ce que le substrat support (14) a une épaisseur supérieure à l'épaisseur de la lame (10) et comprend une ouverture (12) le traversant, et en ce que la lame vibrante est suspendue à partir d'une extrémité de ladite ouverture.

9. Détecteur chimique selon la revendication 8, caractérisé en ce que la seconde électrode (16) est une plaque métallique recouvrant l'extrémité opposée de ladite ouverture (12).

10. Détecteur chimique selon l'une quelconque des revendications 5 à 9, caractérisé en ce que le moyen détecteur (20) et l'oscillateur (34) sont formés directement sur la surface de la structure solidaire (10, 14).

11. Détecteur chimique selon la revendication 10, caractérisé en ce que le moyen détecteur (20) est un pont piezoélectrique formé à l'extrémité de base de la lame (10) adjacente à ladite structure solidaire (14).

12. Détecteur chimique selon la revendication 10, caractérisé en ce que le moyen détecteur (20) est un diviseur de tension à deux éléments (50, 52) comprenant au moins un premier élément piezorésistif (50) disposé à l'extrémité de base de la lame (10) adjacente à la structure solidaire (14).

13. Détecteur chimique selon l'une quelconque des revendications 1 à 12, caractérisé en ce qu'il comprend deux lames (110, 112) ayant la même fréquence de résonnance initiale et associées chacune à un oscillateur respectif (134, 144) et à un moyen détecteur respectif (120, 122), au moins l'une (110) des lames portant une couche (30) de matériau réactif, et un circuit mélangeur (150) agissant en réponse aux fréquences de résonnance des deux lames (110, 112) pour produire un signal de sortie ayant une composante de fréquence égale à la différence entre leurs fréquences de résonnance.

14. Détecteur chimique selon la revendication 13, caractérisé en ce que les deux lames (110, 112) portent des couches de matériaux réactifs différents.

15. Détecteur chimique selon la revendication 14, caractérisé en ce que la couche de matériau réactif portée par l'une des deux lames (110, 112) interagit avec un premier et un second composant de l'échantillon gazeux à analyser, et en ce que la couche de matériau réactif portée par l'autre lame interagit avec seulement le premier composant de l'échantillon gazeux.

16. Détecteur chimique selon l'une quelconque des revendications 1 à 12, caractérisé en ce qu'il comprend une pluralité de lames (110, 112, 114, 116, 118) portant des couches de matériaux réactifs qui interagissent avec différents composants de l'échantillon gazeux à analyser, chaque lame étant associée à un oscillateur respectif (134, 144, 154, 164, 174) et un moyen détecteur respectif (120, 122, 124, 126, 128).

17. Détecteur chimique selon la revendication 16, caractérisé en ce qu'il comprend en outre une lame de référence (112) ne portant aucune couche de matériau réactif, cette lame de référence étant associée à un oscillateur de référence (144) et à un moyen détecteur de référence (122).

18. Détecteur chimique selon la revendication 17, caractérisé en ce qu'il comprend en outre des circuits mélangeurs (150, 160, 170, 180) agissant en réponse aux fréquences de résonnance de chacune des lames (110, 114, 116, 118) et de la lame de référence (112) pour produire un signal de sortie pour chaque lame, chaque signal de sortie ayant une composante de fréquence égale à la différence entre la fréquence de résonnance de sa lame associée et la fréquence de résonnance de la lame de référence.

19. Détecteur chimique selon la revendication 18, caractérisé en ce qu'on moins une (118) desdites lames porte une couche de matériau réactif interagissant avec deux composants différents de l'échantillon gazeux à analyser et en ce qu'une seconde (116) desdites lames porte une couche de matériau réactif sensible à un seul des deux composants différents, et en ce que le détecteur comprend en outre un circuit mélangeur (180) pour produire un signal de sortie en réponse aux fréquences de résonnance desdites première et seconde lames (118, 116) ayant une composante de fréquence égale à la différence entre leurs fréquences de résonnance.

20. Détecteur chimique selon l'une des revendications 18 ou 19, caractérisé en ce que les moyens oscillateurs et détecteurs associés et l'oscillateur de référence et le moyen détecteur produisent chacun un signal de sortie indicatif des fréquences de résonnance de leur lame associée et de la lame de référence, respectivement, et en ce que les circuits mélangeurs agissent en réponse aux signaux de sortie produits par lesdits moyens oscillateurs et détecteurs.

FIG. I

FIG.2

OSCILLATOR CIRCUIT

**0 072 744**

FIG.3

FIG.4

FIG.5

2

FIG.6

FIG.7